# EUROPÄISCHE PATENTSCHRIFT

(11) **EP 3 101 324 B1**
(45) Veröffentlichungstag und Bekanntmachung des Hinweises auf die Patenterteilung: **05.09.2018**
(21) Anmeldenummer: 16170150.3
(22) Anmeldetag: 18.05.2016
(51) Int. Cl.: F16L 15/08, F16L 15/00, F16B 7/06

(54) **ROHRVERBINDUNG MIT EINER MUFFENEINHEIT**
PIPE COUPLING WITH A SLEEVE UNIT
RACCORD DE TUYAUTERIE AVEC UN ASSEMBLAGE DE MANCHON

(30) Priorität: 01.06.2015 US 201562169203 P
(43) Veröffentlichungstag der Anmeldung: 07.12.2016
(73) Patentinhaber: Ferrum AG, 5503 Schafisheim (CH)
(72) Erfinder: Hell, Günter, 5732 Zetzwil (CH); Hirt, Pascal, 5724 Dürrenäsch (CH)
(74) Vertreter: Intellectual Property Services GmbH

(56) Entgegenhaltungen:
- DE-A1- 2 317 296
- US-A- 5 474 334
- US-A- 5 882 044

## Beschreibung

Die Erfindung betrifft eine Rohrverbindung zur Verbindung von zwei, endseitig mit Gewindeabschnitten versehenen Verbindungsstücken gemäss dem Oberbegriff des unabhängigen Anspruchs 1. Die Erfindung betrifft weiter eine Muffeneinheit für eine Rohrverbindung gemäss dem unabhängigen Anspruch 12 und eine innere Muffe und/oder äussere Muffe für eine Muffeneinheit einer Rohrverbindung gemäss dem unabhängigen Anspruch 15.

In der DE 42 31 084 A1 ist eine Rohrverbindung zur Verbindung von zwei, endseitig mit Gewindeabschnitten versehenen Verbindungsstücken beschrieben. Die Rohrverbindung umfasst dabei ein erstes Verbindungsstück mit einer ersten Stirnseite und einem als Rechtsgewinde ausgebildeten ersten Gewindeabschnitt, ein zweites Verbindungsstück mit einer zweiten Stirnseite und einem als Linksgewinde ausgebildeten zweiten Gewindeabschnitt, und eine Muffeneinheit mit einem ersten Innengewinde, das im Einbauzustand mit dem Rechtsgewinde des ersten Verbindungsstücks verschraubt ist, und einem zweiten Innengwinde, das im Einbauzustand mit dem Linksgewinde des zweiten Verbindungsstücks verschraubt ist. Aufgrund dieser Art der Gewindeausbildungen erfolgt bei einer Drehbewegung der Muffeneinheit eine entsprechende, einander entgegengerichtete axiale Verschiebebewegung des ersten und zweiten Verbindungsstückes, so dass im Einbauzustand die Stirnseiten der Verbindungsstücke aneinander anliegen. Zur Verdrehsicherung sind die Stirnseiten der Verbindungsstücke jeweils mit korrespondierenden Profilierungen versehen, so dass die Stirnseiten im Einbauzustand formschlüssig verbunden sind. Zusätzlich sind an den Stirnseiten der Verbindungsstücke ausserhalb der Profilierungen ringförmige Nuten vorgesehen, zur Aufnahme eines inneren Dichtungselements, das in Form eines Dichtungsringes ausgebildet ist. Durch das innere Dichtungselement soll ein Austreten eines geförderten Fluids in das Innere der Rohrverbindung verhindert werden. Darüber hinaus weist die Rohrverbindung zwischen der Muffeneinheit und den beiden Verbindungsstücken jeweils ein weiteres Dichtungselement auf, welches ebenfalls in Form eines Dichtungsringes ausgebildet ist und im Einbauzustand die Rohrverbindung zur Umgebung hin abdichtet.

Ein wesentlicher Nachteil der beschriebenen Rohrverbindung besteht darin, dass das erste Verbindungsstück und das zweite Verbindungsstück aufgrund der Profilierung an den jeweiligen Stirnseiten in Umfangsrichtung nicht in jeder beliebigen Ausrichtung miteinander verbindbar sind. Um vorgegebene Ausrichtungen in Umfangsrichtung und damit eine sichere Dichtfunktion zu erzielen, kann es durch die Verbindung zu Verdrehungen der beiden Verbindungsstücke in Umfangsrichtung und daraus folgenden Spannungen in der Rohrverbindung kommen. Diese Spannungen können sich dabei auch in schädlicher Weise auf den Bereich ausserhalb der Rohrverbindung übertragen, was im Extremfall mit der Gefahr von Rissen und Brüchen verbunden ist. Um Verdrehungen der beiden Verbindungsstücke in Umfangsrichtung und die damit einhergehenden Spannungen zu verhindern, müssen daher die einzelnen Bauteile der Rohrverbindung mit niedrigen Toleranzen gefertigt werden.

Bedingt durch die grossen Kontaktflächen, die an den Stirnseiten der jeweiligen Verbindungsstücke aufgrund der Profilierung entstehen, können undichte Verbindungen entstehen. Um eine sichere Dichtfunktion zu gewährleisten, kommen auf den inneren Dichtungsring daher besondere Anforderungen zu.

Zudem ist die Fertigung der Profilierung an der Stirnseite der jeweiligen Verbindungsstücke mit einem hohen Fertigungsaufwand verbunden.

Auch hat es sich herausgestellt, dass die beiden zusätzlichen Dichtungsringe zwischen der Muffeneinheit und den jeweiligen Verbindungsstücken nicht sicher verhindern können, dass Fremdpartikel von Aussen in das Innere der Rohrverbindung eindringen.

Eine gattungsgemässe Rohrverbindung ist auch in der US 5,474,334 beschrieben. Die darin gezeigte Rohrverbindung umfasst ein erstes und zweites Verbindungsstück, welche im Einbauzustand mit einer Muffeneinheit bestehend aus einer inneren und einer äusseren Muffe verschraubt sind. Um ein Ausdringen des Fördermediums aus der Rohrverbindung zu verhindern, weist die Rohrverbindung zwischen den beiden Verbindungsstücken ein inneres Dichtungselement auf.

Die Aufgabe der Erfindung besteht daher darin, eine Rohrverbindung bereitzustellen, bei welcher die beiden Verbindungsstücke in jeder beliebigen Ausrichtung in Umfangsrichtung miteinander verbindbar sind, ohne dass es zu Verdrehungen der beiden Verbindungsstücke in Umfangsrichtung kommt, die einzelnen Bauteile auch mit erhöhten Toleranzen gefertigt werden können, und im Einbauzustand eine sichere Abdichtung nach Aussen und Innen gewährleistet ist.

Die diese Aufgabe lösenden Gegenstände der Erfindung sind durch die Merkmale des unabhängigen Anspruchs 1 gekennzeichnet.

Die abhängigen Ansprüche beziehen sich auf besonders vorteilhafte Ausführungsformen der Erfindung.

Die Erfindung betrifft somit eine Rohrverbindung zur Verbindung von zwei, endseitig mit Gewindeabschnitten versehenen Verbindungsstücken. Die Rohrverbindung umfasst ein erstes Verbindungsstück mit einer ersten Stirnseite und einem als Rechtsgewinde ausgebildeten ersten Gewindeabschnitt, ein zweites Verbindungsstück mit einer zweiten Stirnseite und einem als Linksgewinde ausgebildeten zweiten Gewindeabschnitt, und eine zweiteilig ausgebildete Muffeneinheit umfassend eine innere Muffe und eine äussere Muffe, wobei die innere Muffe im Einbauzustand drehfest mit der äusseren Muffe verbunden ist, und die innere Muffe und die äussere Muffe in Bezug auf eine Längsrichtung der Rohrverbindung nicht untereinander fixiert sind, und die innere Muffe ein als Rechtsgewinde ausgebildetes erstes Innengwinde und ein als Linksgewinde ausgebildetes zweites Innengwinde aufweist, wobei das erste Innengewinde im Einbauzustand mit dem Rechtsgewinde des ersten Verbindungsstücks verschraubt ist und das zweite Innengwinde im Einbauzustand mit dem Linksgewinde des zweiten Verbindungsstücks verschraubt ist, und das erste Verbindungsstück einen ersten Flansch aufweist, und im Einbauzustand der erste Flansch an einer ersten Stirnfläche der äusseren Muffe anliegt.Die Rohrverbindung umfasst zudem ein inneres Dichtungselement, das im Einbauzustand zwischen der ersten Stirnseite des ersten Verbindungsstücks und der zweiten Stirnseite des zweiten Verbindungsstücks angeordnet ist.
Erfindungsgemäss ist im Einbauzustand zwischen dem ersten Flansch des ersten Verbindungsstückes und der ersten Stirnfläche der äusseren Muffe ein erstes äusseres Dichtungselement angeordnet ist, und an der ersten Stirnfläche der äusseren Muffe und/oder an dem ersten Flansch des ersten Verbindungsstückes eine erste Nut für die Klemmung des ersten äusseren Dichtungselements angeordnet.
Mittels der erfindungsgemässen Rohrverbindung können Rohre und auch Schläuche über Verbindungsstücke dicht und reversibel End zu End miteinander verbunden werden. Die Rohre und Schläuche sind dabei mit den Verbindungsstücken verbunden. Die Rohre und Schläuche können dabei mit den Verbindungsstücken z.B. verschweisst oder verklebt sein.

Im Rahmen dieser Erfindung ist die Muffeneinheit zweiteilig ausgebildet, mit einer inneren Muffe und einer äusseren Muffe. Die innere Muffe dient zur Aufnahme der Verbindungsstücke und verfügt dazu an ihren Enden über ein erstes und zweites Innengewinde, wobei das erste als ein Rechtsgewinde und das zweite als ein Linksgewinde ausgebildet ist. Die Innere Muffe in der äusseren Muffe gelagert In Bezug auf eine Längsrichtung der Rohrverbindung sind die innere Muffe und die äussere Muffe nicht untereinander fixiert. Die Aussenfläche der inneren Muffe und die Innenfläche der äusseren Muffe weisen eine korrespondierende Geometrie auf, so dass die äussere Muffe im Montagezustand und Einbauzustand mit der inneren Muffe drehfest verbunden ist, und die äussere Muffe im Montagezustand in Bezug auf eine Längsrichtung der Rohrverbindung relativ zur inneren Muffe verschiebbar ist, d.h im Montagezustand sind die äussere Muffe und die innere Muffe in Bezug auf die Längsrichtung der Rohrverbindung nicht untereinander fixiert. Hierdurch ist es möglich, dass sich im Montagezustand die äussere Muffe in Längsrichtung der Rohrverbindung zwischen den Verbindungsstücken ausrichten kann, so dass Fertigungstoleranzen der einzelnen Bauteile der Rohrverbindung ausgeglichen werden können. Die Ausrichtung der äusseren Muffe erfolgt dabei ohne eine Verdrehung der beiden Verbindungsstücke in Umfangsrichtung.

Ein wesentlicher Vorteil der erfindungsgemässen Rohrverbindung besteht darin, dass das erste Verbindungsstück und das zweite Verbindungsstück aufgrund der fehlenden Profilierung an den jeweiligen Stirnseiten in Umfangsrichtung in jeder beliebigen Ausrichtung miteinander verbindbar sind. Aufgrund dessen kommt es durch die Verbindung nicht zu Verdrehungen der beiden Verbindungsstücke in Umfangsrichtung und daraus folgenden Spannungen in der Rohrverbindung. Hierdurch können Risse und Brüche in der Rohrverbindung und auch im Bereich ausserhalb der Rohrverbindung verhindert werden. Zudem können durch die erfindungsgemässe Ausbildung der Rohrverbindung die einzelnen Bauteile der Rohrverbindung mit grösseren Toleranzen gefertigt werden.

Bedingt durch die kleineren Kontaktflächen, die an den Stirnseiten der jeweiligen Verbindungsstücke aufgrund der fehlenden Profilierung entstehen, können undichte Verbindungen verhindert werden.

Zudem ist aufgrund der fehlenden Profilierung an der Stirnseite der jeweiligen Verbindungsstücke die Fertigung der Rohrverbindung mit einem geringeren Fertigungsaufwand verbunden, wodurch die Fertigungskosten erheblich reduziert werden.

Auch wird durch die erfindungsgemässe Ausgestaltung der Rohrverbindung sichergestellt, dass Fremdpartikel von Aussen in das Innere der Rohrverbindung eindringen.

In einem für die Praxis sehr wichtigen Ausführungsbeispiel sind die Aussenfläche der inneren Muffe als ein Polygon, und die Innenfläche der äusseren Muffe als ein korrespondierendes Polygon ausgebildet. Hierdurch wird erreicht, dass im Montagezustand und Einbauzustand die äussere Muffe mit der inneren Muffe drehfest verbunden ist, und sich im Montagezustand die äussere Muffe in Längsrichtung der Rohrverbindung zwischen den Verbindungsstücken problemlos ausrichten kann. Als vorteilhaft hat es sich hierbei herausgestellt, wenn das Polygon als Sechskant ausgebildet ist. Das erste Verbindungsstück weist einen ersten Flansch auf, wobei im Einbauzustand der erste Flansch an einer ersten Stirnfläche der äusseren Muffe unter Wirkung einer Kraft in Längsrichtung der Rohrverbindung anliegt. Hierdurch wird im Einbauzustand eine gute Abdichtung zwischen dem ersten Verbindungsstück und der äusseren Muffe erzielt und somit ein Eindringen von Fremdpartikeln in das Innere der Rohrverbindung unterbunden. Der erste Flansch kann dabei einen äusseren Durchmesser aufweisen, der mit einem Durchmesser der äusseren Muffe identisch ist. Im Einbauzustand ist zwischen dem ersten Flansch des ersten Verbindungsstückes und der ersten Stirnfläche der äusseren Muffe ein erstes äusseres Dichtungselement angeordnet. Das erste äussere Dichtungselement, kann dabei z.B. als ein Dichtungsring ausgebildet sein. Im Einbauzustand ist das erste äussere Dichtungselement zwischen dem ersten Flansch und der ersten Stirnfläche in Längsrichtung der Rohrverbindung geklemmt. Über das erste äussere Dichtungselement wird eine hohe Dichtungswirkung erzielt und ein Eindringen von Fremdpartikeln in das Innere der Rohrverbindung sicher unterbunden. An der ersten Stirnfläche der äusseren Muffe und/oder an dem ersten Flansch des ersten Verbindungsstückes ist eine erste Nut für die Klemmung des ersten äusseren Dichtungselements angeordnet. Die Nut kann dabei z.B ringförmig ausgebildet sein. Über die erste Nut wird eine sichere Aufnahme des ersten äusseren Dichtungselements und somit eine sichere Dichtfunktion des ersten äusseren Dichtungselements gewährleistet.
In einem weiteren bevorzugten Ausführungsbeispiel weist das zweite Verbindungsstück einen zweiten Flansch auf, wobei im Einbauzustand der zweite Flansch an einer zweiten Stirnfläche der äusseren Muffe unter Wirkung einer Kraft in Längsrichtung der Rohrverbindung anliegt. Hierdurch wird im Einbauzustand eine gute Abdichtung zwischen dem zweiten Verbindungsstück und der äusseren Muffe erzielt und somit ein Eindringen von Fremdpartikeln in das Innere der Rohrverbindung unterbunden. Der zweite Flansch kann dabei einen äusseren Durchmesser aufweisen, der mit einem Durchmesser der äusseren Muffe identisch ist.
Bevorzugt, aber nicht notwendig, kann im Einbauzustand zwischen dem zweiten Flansch des zweiten Verbindungsstückes und der zweiten Stirnfläche der äusseren Muffe ein zweites äusseres Dichtungselement angeordnet sein. Das zweite äussere Dichtungselement, kann dabei z.B. als ein Dichtungsring ausgebildet sein. Im Einbauzustand ist das zweite äussere Dichtungselement zwischen dem zweiten Flansch und der zweiten Stirnfläche in Längsrichtung der Rohrverbindung geklemmt. Über das zweite äussere Dichtungselement wird eine hohe Dichtungswirkung erzielt und ein Eindringen von Fremdpartikeln in das Innere der Rohrverbindung sicher unterbunden.
Auch hierbei hat es sich als vorteilhaft herausgestellt, wenn an der zweiten Stirnfläche der äusseren Muffe und/oder an dem zweiten Flansch des zweiten Verbindungsstückes eine zweite Nut für die Klemmung des zweiten äusseren Dichtungselements angeordnet ist. Die zweite Nut kann dabei z.B. ringförmig ausgebildet sein. Über die zweite Nut wird eine sichere Aufnahme des zweiten äusseren Dichtungselements und somit eine sichere Dichtfunktion des zweiten äusseren Dichtungselements gewährleistet.
Zudem ist es von Vorteil, wenn das erste Verbindungsstück erste Zentriermittel zur Zentrierung des ersten Verbindungsstückes an der äusseren Muffe und/oder der inneren Muffe aufweist, und/ oder das zweite Verbindungsstück zweite Zentriermittel zur Zentrierung des zweiten Verbindungsstücks an der äusseren Muffe und/oder der inneren Muffe aufweist. Aufgrund des ersten Zentriermittels und des zweiten Zentriermittels wird eine optimale Ausrichtung der einzelnen Bauteile zueinander erzielt, was sich positiv auf die Dichtigkeit der Rohrverbindung auswirkt.
Bevorzugt, aber nicht notwendig, kann auch die innere Muffe zwischen dem ersten Innengewinde und dem zweiten Innengewinde Innenzentriermittel zur Zentrierung des ersten und/ oder des zweiten Verbindungsstückes aufweisen. Auch hierdurch wird eine optimale Ausrichtung der einzelnen Bauteile zueinander erzielt, was sich positiv auf die Dichtigkeit der Rohrverbindung auswirkt.
Schliesslich hat es sich als vorteilhaft herausgestellt, wenn an der Aussenfläche der äusseren Muffe Flächen zum Drehen der äusseren Muffe angeordnet sind. Die Flächen dienen dabei zur Aufnahme eines Schraubenschlüssels, über welchen die Muffeneinheit in Drehung versetzt werden kann. Von Vorteil ist es hierbei, wenn an der Aussenfläche der äusseren Muffe wenigstens zwei parallele Flächen unter einer bestimmten Schlüsselweite angeordnet sind.

Weitere Vorteile, Merkmale und Einzelheiten der Erfindung ergeben sich anhand der nachfolgenden Beschreibung eines Ausführungsbeispiels sowie anhand der Zeichnungen, in welchen gleiche oder funktionsgleiche Elemente mit identischen Bezugszeichen versehen sind.

Dabei zeigen:
- Fig. 1: eine Explosionsdarstellung eines Ausführungsbeispiels einer erfindungsgemässen Rohrverbindung und
- Fig. 2: einen Längsschnitt gemäss Fig. 1, wobei sich die Rohrverbindung im Einbauzustand befindet.

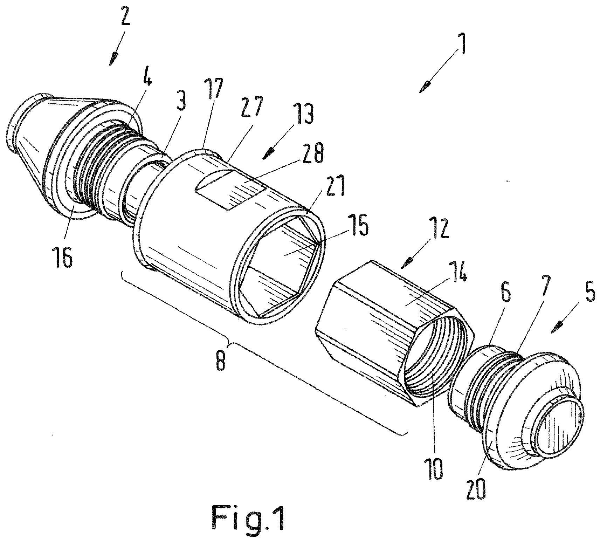

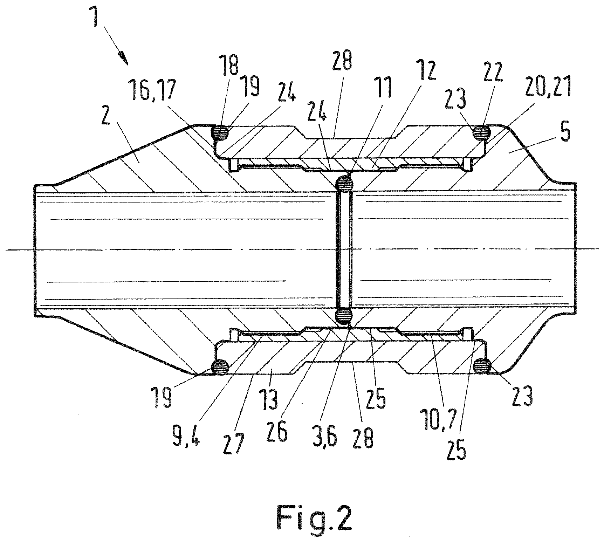

Fig. 1 zeigt eine Explosionsdarstellung eines Ausführungsbeispiels einer erfindungsgemässen Rohrverbindung 1. Die Rohrverbindung 1 umfasst dabei ein erstes Verbindungsstück 2 mit einer ersten Stirnseite 3, einem ersten Flansch 16 und einem als Rechtsgewinde ausgebildeten ersten Gewindeabschnitt 4, ein zweites Verbindungsstück 5 mit einer zweiten Stirnseite 6, einem zweiten Flansch 20 und einem als Linksgewinde ausgebildeten zweiten Gewindeabschnitt 7, und eine Muffeneinheit 8. Die Muffeneinheit 8 ist zweiteilig mit einer inneren Muffe 12 und einer äusseren Muffe 13 mit einer ersten und zweiten Stirnfläche (17, 21) ausgebildet. Die innere Muffe 12 ist mit einem ersten als Rechtsgewinde ausgebildeten Innengwinde 9 und einem zweiten als Linksgewinde ausgebildeten Innengwinde 10 versehen. Wie aus Fig. 2 hervorgeht, ist im Einbauzustand die innere Muffe 12 über das erste Innengewinde 9 mit dem Rechtsgewinde 4 des ersten Verbindungsstücks 2 und über das zweite Innengewinde 10 mit dem Linksgewinde 7 des zweiten Verbindungsstücks 5 verschraubt.
Die Aussenfläche 14 der inneren Muffe 12 ist als ein Polygon in Form eines Sechskants, und die Innenfläche 15 der äusseren Muffe 13 als ein korrespondierendes Polygon ausgebildet. An der Aussenfläche 27 der äusseren Muffe 13 sind zwei parallele Flächen 28 zum Drehen der äusseren Muffe 13 angeordnet. Die Flächen 28 dienen dabei zur Aufnahme eines Schraubenschlüssels, über welchen die Muffeneinheit 8 im Montagezustand in Drehung versetzt werden kann.
Aufgrund der korrespondierenden polygonartigen Ausgestaltung der Aussenfläche 14 der inneren Muffe 12 und der Innenfläche 15 der äusseren Muffe 13 ist im Montagezustand und Einbauzustand die äussere Muffe 13 mit der inneren Muffe 12 drehfest verbunden. Gleichzeitig ist durch diese Ausgestaltung die äussere Muffe 13 im Montagezustand in Längsrichtung der Rohrverbindung 1 zwischen den Verbindungsstücken 2, 5 ausrichtbar. D.h. im Montagezustand sind die innere Muffe 12 und die äussere Muffe 13 in Bezug auf eine Längsrichtung der Rohrverbindung 1 nicht untereinander fixiert.
Im Montagezustand erfolgt aufgrund der Gewindeausbildungen der inneren Muffe 12 und der beiden Verbindungsstücke 2, 5 bei einer Drehbewegung der Muffeneinheit 8 eine entsprechende, einander entgegengerichtete axiale Verschiebebewegung des ersten und zweiten Verbindungsstückes 2, 5, so dass im Einbauzustand (Fig.2) die Stirnseiten 3, 6 der Verbindungsstücke 2, 5 aneinander anliegen.
Im Einbauzustand ist zwischen der ersten Stirnseite 3 des ersten Verbindungsstücks 2 und der zweiten Stirnseite 6 des zweiten Verbindungsstücks 5 ein inneres Dichtungselement 11 in Form eines Dichtungsringes angeordnet. Durch das innere Dichtungselement 11 wird ein Austreten des geförderten Fluids in das Innere der Rohrverbindung 1 verhindert. Darüber hinaus ist im Einbauzustand zwischen dem ersten Flansch 16 des ersten Verbindungsstückes 2 und der ersten Stirnfläche 17 der äusseren Muffe 13 ein erstes äusseres Dichtungselement 18 und zwischen dem zweiten Flansch 20 des zweiten Verbindungsstückes 5 und der zweiten Stirnfläche 21 der äusseren Muffe 13 ein zweites äusseres Dichtungselement 22 angeordnet. Das erste äussere Dichtungselement 18 und das zweite äussere Dichtungselement 22 sind dabei ebenfalls in Form eines Dichtungsringes ausgebildet. Das erste und zweite äussere Dichtungselement 18, 22 ist jeweils in Längsrichtung der Rohrverbindung 1 durch den ersten Flansch 16 und die erste Stirnfläche 17 bzw. den zweiten Flansch 20 und die zweiten Stirnfläche 21 geklemmt. Über das erste und zweite äussere Dichtungselement 18, 22 wird ein Eindringen von Fremdpartikeln in das Innere der Rohrverbindung 1 sicher unterbunden.

Zur sicheren Aufnahme des ersten äusseren Dichtungselements 18 weist die erste Stirnfläche 17 der äusseren Muffe 13 und der erste Flansch 16 des ersten Verbindungsstückes 2 jeweils eine erste Nut 19 auf. Die erste Nut 19 ist dabei passend zum ersten äusseren Dichtungselement 18 ringförmig ausgebildet. Ebenfalls weist zur sicheren Aufnahme des zweiten äusseren Dichtungselements 22 die zweite Stirnfläche 21 der äusseren Muffe 13 und der zweite Flansch 20 des zweiten Verbindungsstückes 5 jeweils eine zweite Nut 23 auf. Die zweite Nut 23 ist dabei ebenfalls passend zum zweiten äusseren Dichtungselement 22 ringförmig ausgebildet.

Zur Zentrierung des ersten Verbindungsstückes 2 an der äusseren und der inneren Muffe 12, 13 weist das erste Verbindungsstück 2 erste Zentriermittel 24 auf. Ebenfalls weist das zweite Verbindungsstück 5 zweite Zentriermittel 25 zur Zentrierung des zweiten Verbindungsstücks 5 an der äusseren und der inneren Muffe 12, 13 auf. Zudem sind an der inneren Muffe 12 zwischen dem ersten Innengewinde 9 und dem zweiten Innengewinde 10 Innenzentriermittel 26 zur Zentrierung des ersten und des zweiten Verbindungsstückes 2, 5 angeordnet. Aufgrund des ersten Zentriermittels 24, des zweiten Zentriermittels 25 und des Innenzentriermittels 26 wird eine optimale Ausrichtung der einzelnen Bauteile im Einbauzustand zueinander erzielt, was sich positiv auf die Dichtigkeit der Rohrverbindung 1 auswirkt.

## Patentansprüche

1. Rohrverbindung (1) zur Verbindung von zwei, endseitig mit Gewindeabschnitten versehenen Verbindungsstücken, umfassend ein erstes Verbindungsstück (2) mit einer ersten Stirnseite (3) und einem als Rechtsgewinde ausgebildeten ersten Gewindeabschnitt (4), ein zweites Verbindungsstück (5) mit einer zweiten Stirnseite (6) und einem als Linksgewinde ausgebildeten zweiten Gewindeabschnitt (7), eine zweiteilig ausgebildete Muffeneinheit (8) umfassend eine innere Muffe (12) und eine äussere Muffe (13), wobei die innere Muffe (12) im Einbauzustand drehfest mit der äusseren Muffe (13) verbunden ist, und die innere Muffe (12) und die äussere Muffe (13) in Bezug auf eine Längsrichtung der Rohrverbindung (1) nicht untereinander fixiert sind, und die innere Muffe (12) ein als Rechtsgewinde ausgebildetes erstes Innengwinde (9) und ein als Linksgewinde ausgebildetes zweites Innengwinde (10) aufweist, wobei das erste Innengewinde (9) im Einbauzustand mit dem Rechtsgewinde (4) des ersten Verbindungsstücks (2) verschraubt ist und das zweite Innengwinde (10) im Einbauzustand mit dem Linksgewinde (7) des zweiten Verbindungsstücks (5) verschraubt ist, und das erste Verbindungsstück (2) einen ersten Flansch (16) aufweist, und im Einbauzustand der erste Flansch (16) an einer ersten Stirnfläche (17) der äusseren Muffe (13) anliegt, wobei die Rohrverbindung (1) ein inneres Dichtungselement (11) umfasst, das im Einbauzustand zwischen der ersten Stirnseite (3) des ersten Verbindungsstücks (2) und der zweiten Stirnseite (6) des zweiten Verbindungsstücks (5) angeordnet ist, **dadurch gekennzeichnet, dass** im Einbauzustand zwischen dem ersten Flansch (16) des ersten Verbindungsstückes (2) und der ersten Stirnfläche (17) der äusseren Muffe (13) ein erstes äusseres Dichtungselement (18) angeordnet ist, und an der ersten Stirnfläche (17) der äusseren Muffe (13) und/oder an dem ersten Flansch (16) des ersten Verbindungsstückes (2) eine erste Nut (19) für die Klemmung des ersten äusseren Dichtungselements (18) angeordnet ist.

2. Rohrverbindung nach Anspruch 1, wobei die Aussenfläche (14) der inneren Muffe (12) als ein Polygon, insbesondere ein Sechskant, und die Innenfläche (15) der äusseren Muffe (13) als ein korrespondierendes Polygon ausgebildet ist.

3. Rohrverbindung nach Anspruch 1 oder 2, wobei das zweite Verbindungsstück (5) einen zweiten Flansch (20) aufweist, und im Einbauzustand der zweite Flansch (20) an einer zweiten Stirnfläche (21) der äusseren Muffe (13) anliegt.

4. Rohrverbindung nach Anspruch 3, wobei im Einbauzustand zwischen dem zweiten Flansch (20) des zweiten Verbindungsstückes (5) und der zweiten Stirnfläche (21) der äusseren Muffe (13) ein zweites äusseres Dichtungselement (22) angeordnet ist.

5. Rohrverbindung nach Anspruch 4, wobei an der zweiten Stirnfläche (21) der äusseren Muffe (13) und/oder an dem zweiten Flansch (20) des zweiten Verbindungsstückes (5) eine zweite Nut (23) für die Klemmung des zweiten äusseren Dichtungselements (22) angeordnet ist.

6. Rohrverbindung nach einem der Ansprüche 1 bis 5, wobei das erste Verbindungsstück (2) erste Zentriermittel (24) zur Zentrierung des ersten Verbindungsstückes (2) an der äusseren Muffe (13) und/oder der inneren Muffe (12) aufweist, und/ oder das zweite Verbindungsstück (5) zweite Zentriermittel (25) zur Zentrierung des zweiten Verbindungsstücks (5) an der äusseren Muffe (13) und/oder der inneren Muffe (12) aufweist.

7. Rohrverbindung nach einem der Ansprüche 1 bis 6, wobei die innere Muffe (12) zwischen dem ersten Innengewinde (9) und dem zweiten Innengewinde (10) Innenzentriermittel (26) zur Zentrierung des ersten und/ oder des zweiten Verbindungsstückes (2, 5) aufweist.

8. Rohrverbindung nach einem der Ansprüche 1 bis 7, wobei an der Aussenfläche (27) der äusseren Muffe (13) Flächen (28) zum Drehen der äusseren Muffe (13) angeordnet sind.

## Claims

1. A pipe connection (1) for connecting two connecting pieces provided with threaded sections at the end, comprising a first connecting piece (2) with a first front side (3) and a first threaded section (4) designed as a right-hand thread, a second connecting piece (5) with a second front side (6) and a second threaded section (7) designed as a left-hand thread, a sleeve unit (8) designed in two pieces comprising an inner sleeve (12) and an outer sleeve (13), wherein the inner sleeve (12) is connected to the outer sleeve (13) in a torque-proof manner in the mounting condition and the inner sleeve (12) and the outer sleeve (13) are not fixed together with respect to a longitudinal direction of the pipe connection (1), and the inner sleeve (12) has a first internal thread (9) designed as a right-hand thread and a second internal thread (10) designed as a left-hand thread, wherein the first internal thread (9) is screwed to the right-hand thread (4) of the first connecting piece (2) in the mounting condition and the second internal thread (10) is screwed to the left-hand thread (7) of the second connecting piece (5) in the mounting condition, and the first connecting piece (2) has a first flange (16), and the first flange (16) abuts a first front surface (17) of the outer sleeve (13) in the mounting condition, wherein the pipe connection (1) comprises an inner sealing element, which is arranged between the first front side (3) of the first connecting piece (2) and the second front side (6) of the second connecting piece (5) in the mounting condition, **characterized in that** a first outer sealing element (18) is arranged between the first flange (16) of the first connecting piece (2) and the first front surface (17) of the outer sleeve (13) in the mounting condition, and a first groove (19) for clamping the first outer sealing element (18) is arranged at the first front surface (17) of the outer sleeve (13) and / or at the first flange (16) of the first connecting piece (2).

2. A pipe connection according to claim 1, wherein the outer surface (14) of the inner sleeve (12) is designed as a polygon, in particular a hexagon, and the inner surface (15) of the outer sleeve (13) is designed as a corresponding polygon.

3. A pipe connection according to anyone of the claims 1 or 2, wherein the second connecting piece (5) has a second flange (20), and the second flange (20) abuts a second front surface (21) of the outer sleeve (13) in the mounting condition.

4. A pipe connection according to claim 3, wherein a second outer sealing element (22) is arranged between the second flange (20) of the second connecting piece (5) and the second front surface (21) of the outer sleeve (13) in the mounting condition.

5. A pipe connection according to claim 4, wherein a second groove (23) for clamping the second outer sealing element (18) is arranged at the second front surface (21) of the outer sleeve (13) and / or at the second flange (20) of the second connecting piece (5).

6. A pipe connection according to anyone of the claims 1 to 5, wherein the first connecting piece (2) has first centering means (24) for centering the first connecting piece (2) on the outer sleeve (13) and / or the inner sleeve (12), and / or the second connecting piece (5) has second centering means (25) for centering the second connecting piece (5) on the outer sleeve (13) and / or the inner sleeve (12).

7. A pipe connection according to anyone of the claims 1 to 6, wherein the inner sleeve (12) has internal centering means (26) between the first internal thread (9) and the second internal thread (10) for centering the first and / or the second connecting piece (2, 5).

8. A pipe connection according to anyone of the claims 1 to 7, wherein surfaces (28) for rotating the outer sleeve (13) are arranged at the outer surface (27) of the outer sleeve (13).

## Revendications

1. Un raccord de tuyauterie (1) pour le raccordement de deux pièces de raccordement munies de sections filetées à l'extrémité, comprenant une première pièce de raccordement (2) ayant un premier front (3) et une première section filetée (4) conçue comme filetage à droite, une deuxième pièce de raccordement (5) ayant un deuxième front (6) et une deuxième section filetée (7) conçue comme filetage à gauche, un assemblage de manchon (8) en deux parties, comprenant un manchon intérieur (12) et un manchon extérieur (13), dans lequel le manchon intérieur (12) est raccordé au manchon extérieur (13) de manière fixe en rotation à l'état monté, et le manchon intérieur (12) et le manchon extérieur (13) ne sont pas fixés l'un à l'autre par rapport à une direction longitudinale du raccord de tuyauterie (1), et le manchon intérieur (12) a un premier filetage intérieur (9) conçue comme filetage à droite et un deuxième filetage intérieur (10) conçue comme filetage à gauche, dans lequel le premier filetage intérieur (9) est vissé sur le filetage droit (4) de la première pièce de raccordement (2) à l'état monté et le deuxième filetage intérieur (10) est vissé sur le filetage gauche (7) de la deuxième pièce de raccordement (2) à l'état monté, et la première pièce de raccordement (2) a une première bride (16) et la première bride (16) se repose contre une première face frontale (17) du manchon extérieur (13) à l'état monté, dans lequel le raccord de tuyauterie (1) comprend un élément d'étanchéité interne (11), qui est disposé entre le premier front (3) de la première pièce de raccordement (2) et le deuxième front (6) de la deuxième pièce de raccordement (5) à l'état monté, **caractérisé en ce que**, à l'état monté, un premier élément d'étanchéité externe (18) est disposé entre la première bride (16) de la première pièce de raccordement (2) et la première face frontale (17) du manchon extérieur (13), et une première rainure (19) pour serrer le premier élément d'étanchéité externe (18) est disposée sur la première face frontale (17) du manchon extérieur (13) et / ou sur la première bride (16) de la première pièce de raccordement (2).

2. Un raccord de tuyauterie selon la revendication 1, dans lequel la surface extérieure (14) du manchon intérieur (12) est formée sous la forme d'un polygone, en particulier d'un hexagone, et la surface intérieure (15) du manchon extérieur (13) est formée sous la forme d'un polygone correspondant.

3. Un raccord de tuyauterie selon la revendication 1 ou 2, dans lequel la deuxième pièce de raccordement (5) a une deuxième bride (20), et la deuxième bride (20) se repose contre une deuxième face frontale (21) du manchon extérieur (13) à l'état monté.

4. Un raccord de tuyauterie selon la revendication 3, dans lequel un deuxième élément d'étanchéité externe (22) est disposé entre la deuxième bride (20) de la deuxième pièce de raccordement (5) et la deuxième face frontale (2) du manchon extérieur (13) à l'état monté.

5. Un raccord de tuyauterie selon la revendication 4, dans lequel une deuxième rainure (23) pour serrer le deuxième élément d'étanchéité externe (22) est disposée sur la deuxième face frontale (21) du manchon extérieur (13) et / ou sur la deuxième bride (20) de la deuxième pièce de raccordement (5).

6. Un raccord de tuyauterie selon la revendication 1 à 5, dans lequel la première pièce de raccordement (2) a des premiers moyens de centrage (24) pour centrer la première pièce de raccordement (2) sur le manchon extérieur (13) et / ou sur le manchon intérieur (12), et / ou la deuxième pièce de raccordement (5) a des deuxièmes moyens de centrage (25) pour centrer la deuxième pièce de raccordement (5) sur le manchon extérieur (13) et / ou sur le manchon intérieur (12).

7. Un raccord de tuyauterie selon la revendication 1 à 6, dans lequel le manchon intérieur (12) a des moyens de centrage interne (26) entre le premier filetage intérieur (9) et le deuxième filetage intérieur (10) pour centrer la première et / ou la deuxième pièce de raccordement (2, 5).

8. Un raccord de tuyauterie selon la revendication 1 à 7, dans lequel des surfaces (28) pour faire tourner le manchon extérieur (13) sont disposées sur la surface extérieure (27) du manchon extérieur (13).
